# FASCICULE DE BREVET EUROPEEN

(11) **EP 3 880 494 B1**
(45) Date de publication et mention de la délivrance du brevet: **02.07.2025**
(21) Numéro de dépôt: 19832429.5
(22) Date de dépôt: 13.11.2019
(51) Int. Cl.: B62D 55/26, B62D 55/24, B62D 55/04, B60C 11/12, B60C 11/13, B60C 11/03, B60C 7/00

(54) **BANDE DE ROULEMENT POUR VEHICULE AGRICOLE**
LAUFSTREIFEN FÜR EIN LANDWIRTSCHAFTLICHES FAHRZEUG
TREAD FOR AN AGRICULTURAL VEHICLE

(30) Priorité: 14.11.2018 FR 1860469
(43) Date de publication de la demande: 22.09.2021
(73) Titulaire: COMPAGNIE GENERALE DES ETABLISSEMENTS MICHELIN, 63000 Clermont-Ferrand (FR)
(72) Inventeur: PERRIN, Frédéric, 63040 CLERMONT-FERRAND Cedex 9 (FR); DEAN, David, 63040 CLERMONT-FERRAND Cedex 9 (FR); PRAS, Maxime, 63040 CLERMONT-FERRAND Cedex 9 (FR)
(74) Mandataire: M.F.P. Michelin
(86) Numéro de dépôt international: PCT/FR2019/052692
(87) Numéro de publication internationale: WO 2020/099780

(56) Documents cités:
- EP-A1- 0 384 182
- JP-A- H11 342 707

## Description

### DOMAINE DE L INVENTION

La présente invention concerne une bande de roulement destinée à équiper un véhicule agricole et plus particulièrement une bande de roulement dont la performance en traction sur terrain meuble est améliorée.

Bien que non limitée à cette application, l'invention sera plus particulièrement décrite en référence à un véhicule agricole polyvalent c'est à dire un véhicule pouvant rouler aussi bien dans les champs en terrain meuble que sur route, tel qu'un tracteur agricole.

Une bande de roulement pour véhicule agricole peut par exemple être attachée à la périphérie d'un pneumatique. Une bande de roulement peut également être associée non pas à un pneumatique destiné à être monté sur une jante rigide mais associée à une roue élastique non-pneumatique c'est à dire structurellement déformable et dépourvue d'enceinte contenant de l'air sous pression. Une bande de roulement peut également être associée à une chenille pour véhicule agricole.

Une telle bande de roulement est destinée à rouler sur divers types de sols tels que la terre plus ou moins compacte des champs, les chemins non goudronnés d'accès aux champs et les surfaces goudronnées des routes. Compte tenu de la diversité de l'usage, en champ et sur route, la bande de roulement d'un tracteur agricole doit présenter un compromis de performances entre la traction en champ, la résistance aux arrachements, la résistance à l'usure sur route, la résistance au roulement, le confort vibratoire sur route.

### DEFINITIONS

Par direction radiale, on entend dans le présent document toute direction qui est perpendiculaire à l'axe de rotation de la roue. Cette direction correspond à la direction de l'épaisseur de la bande de roulement et est généralement référencée « **Z** ».

Par direction transversale ou axiale, on entend une direction parallèle à l'axe de rotation de la roue. Cette direction est généralement référencée «**Y** ».

Par direction circonférentielle, on entend une direction qui est tangente à tout cercle centré sur l'axe de rotation de la roue. Cette direction est perpendiculaire à la fois à la direction axiale et à toute direction radiale et correspond à la direction de défilement de la bande de roulement lors de son utilisation. Cette direction est généralement référencée « **X** ».

Un pneu comprend, de façon générale, un sommet comprenant radialement à l'extérieur une bande de roulement destinée à venir en contact avec le sol par l'intermédiaire d'une surface de roulement, deux bourrelets destinés à venir en contact avec une jante sur laquelle est monté le pneu et deux flancs reliant le sommet aux bourrelets. Un pneu pour tracteur agricole comprend une armature de carcasse, ancrée dans chaque bourrelet, usuellement composée d'au moins une couche d'éléments de renforcement textiles.

L'armature de carcasse est de façon usuelle surmontée radialement à l'extérieur par une armature de sommet composée d'une pluralité de couches de travail, chaque couche de travail étant constituée d'éléments de renforcement textiles ou métalliques enrobés dans un matériau élastomérique. Les éléments de renforcement sont en général croisés d'une couche à la suivante.

La bande de roulement, qui est la partie du pneu destinée à venir en contact avec le sol en roulage, comprend une surface portante parallèle ou substantiellement parallèle à l'armature de sommet du pneu. Sur la surface portante de la bande de roulement et venant de matière sont moulés des éléments de sculptures.

Des découpures séparent les éléments de sculpture les uns des autres. Parmi les découpures qui peuvent être réalisées par moulage dans une bande de roulement, on distingue les rainures et les incisions. Les incisions, à la différence des rainures, ont une largeur appropriée pour que les parois en vis-à-vis les délimitant viennent en contact au moins partiellement l'une contre l'autre lors du passage dans l'aire de contact. Les rainures génèrent un abaissement sensible des rigidités de compression et de cisaillement de la bande de roulement puisque ces rainures délimitent des portions de matière pouvant se déformer de manière beaucoup plus importante que les portions délimitées par des incisions dont les parois viennent en appui l'une contre l'autre lors du passage dans l'aire de contact.

### ÉTAT DE LA TECHNIQUE

Les bandes de roulement pour engins agricoles comportent conventionnellement des barrettes s'étendant du centre de la bande de roulement vers les épaules. Ces barrettes sont disposées de chaque côté du plan médian équatorial du pneu de manière à former un motif en V, la pointe du motif en V (ou encore motif en chevron) étant destinée à entrer la première dans l'aire de contact avec le sol. Les barrettes sont espacées entre elles pour former des sillons ou rainures ; la largeur de ces sillons est déterminée de façon à permettre un bon fonctionnement à la fois sur route et sur terrain meuble. Les barrettes présentent une symétrie par rapport au plan médian équatorial du pneumatique, avec le plus souvent un décalage circonférentiel entre les deux rangées de barrettes, similaire à celui obtenu par une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable. Les barrettes ont une face de contact destinée à rouler sur un sol rigide comme par exemple les routes empruntées pour se rendre à proximité des champs et une face d'attaque destinée à transmettre la force motrice lorsque l'engin agricole se déplace sur un terrain meuble, typiquement la terre des champs. Pour ce faire, la face d'attaque des barrettes est généralement parallèle à une direction radiale. Les documents D1 (EP 0384182 A1) et D2 (JP H11 342707 A) décrivent de telles bandes de roulement pour engins agricoles.

Une insatisfaction récurrente concerne les performances de traction sur sol meuble des bandes de roulement connues. La productivité des engins agricoles est directement liée à leur capacité de traction sur sol meuble. Améliorer cette performance permettrait à l'utilisateur d'améliorer non seulement le rendement de son matériel mais aussi de diminuer ses coûts d'exploitation, par exemple en réduisant la consommation de carburant par unité de surface exploitée. Naturellement, l'amélioration de la traction ne doit pas se faire au détriment d'autres performances comme par exemple la résistance à l'usure, le confort et la possibilité de rouler à vitesse suffisamment élevée sur route.

### BREF EXPOSE DE L'INVENTION

Cet objectif a été atteint selon l'invention par une bande de roulement pour l'essieu moteur d'un engin agricole, ladite bande de roulement comprenant des éléments de sculpture s'étendant radialement vers l'extérieur à partir d'une surface portante, lesdits éléments de sculpture comprenant dans la partie centrale de la bande de roulement une série de blocs juxtaposés les uns aux autres dans la direction longitudinale, lesdits blocs de sculpture étant séparés les uns des autres par des découpures transversales, lesdits blocs comportant selon le sens de roulement une face d'attaque, une face de contact et une face de fuite, ladite face d'attaque ayant, à partir de la surface portante, une hauteur radiale HRA supérieure à la hauteur radiale HRF de la face de fuite, la face de contact étant orientée selon un angle α par rapport à la direction radiale Z, α étant compris entre 93 et 105 degrés, la profondeur radiale PR des découpures transversales étant au moins égal à 50% de la hauteur radiale HRA de la face d'attaque, la largeur desdits blocs représentant au moins 15% de la largeur de la bande de roulement, les découpures transversales étant des incisions transversales, les incisions transversales étant inclinées vers l'avant selon le sens de roulement de la bande de roulement, les incisions transversales étant orientées selon un angle **β** par rapport à la direction radiale Z, **β** étant compris entre 5 et 35 degrés , **β** étant au moins égal à 20 degrés et la bande de roulement comprenant en outre des éléments de sculpture latéraux, lesdits éléments de sculpture latéraux comprenant une face de contact, une face d'attaque et une face de fuite, ladite face d'attaque étant inclinée d'un angle **γ** vers l'arrière par rapport à la direction radiale **Z** selon le sens de roulement de la bande de roulement, l'angle **γ** étant compris entre 50 degrés et 75 degrés.

De préférence, l'angle **α** est compris entre 97 et 100 degrés.

De préférence, la profondeur radiale des incisions transversales est au moins égal à 70% de la hauteur radiale de la face d'attaque.

De préférence, l'angle **γ** est compris entre 60 degrés et 70 degrés.

De préférence, les éléments de sculpture latéraux sont des blocs ayant une base de quadrilatère et formant entre eux des rangées selon une direction sensiblement transversale.

De préférence, lesdits blocs de sculpture au sein de chaque rangée sont disposés de façon à ce que leurs faces d'attaque soient alignées entre elles.

L'invention concerne également un pneumatique, une roue non pneumatique et une chenille comprenant une telle bande de roulement.

D'autres caractéristiques et avantages de l'invention ressortent de la description faite ci-après en référence au dessin annexé qui montre, à titre d'exemple non limitatif, des formes de réalisation de l'objet de l'invention.

### BREVE DESCRIPTION DES FIGURES

La figure **1** est une vue en perspective montrant un pneu comprenant une bande de roulement selon un premier mode de réalisation de l'invention.
La figure **2** est une vue du détail **D1** de la figure **1****.**
La figure **3** est une vue de face de la bande de roulement du pneu de la figure **1****.**
La figure **4** est une vue en coupe selon **A-A** de la bande de roulement des figures **1** à **3****.**
La figure **5** est une vue à plus grande échelle montrant un détail **D2** de la coupe de la figure **4****.**
La figure **6** est une vue en perspective montrant une chenille comportant une bande de roulement selon un deuxième mode de réalisation de l'invention.
La figure **7** est une vue en perspective montrant une chenille comportant une bande de roulement selon un troisième mode de réalisation de l'invention.
La figure **8** est une vue de côté illustrant une chenille selon la figure **6** ou **7****.**
La figure **9** est une vue de face montrant un pneu comprenant une bande de roulement selon un quatrième mode de réalisation de l'invention.
La figure **10** est une vue en coupe selon **B - B** de la bande de roulement de la figure **9****.**
La figure **11** est une vue en perspective montrant un pneu comprenant une bande de roulement selon un cinquième mode de réalisation de l'invention.
Les figures **12-a** à **12-c** sont des vues schématiques de détail du profil d'un élément de sculpture latéral d'une bande de roulement de l'invention.
Les figures **13** à **15** sont des vues schématiques d'autres exemples de profils d'un élément de sculpture latéral d'une bande de roulement de l'invention.

### DESCRIPTION DES FIGURES

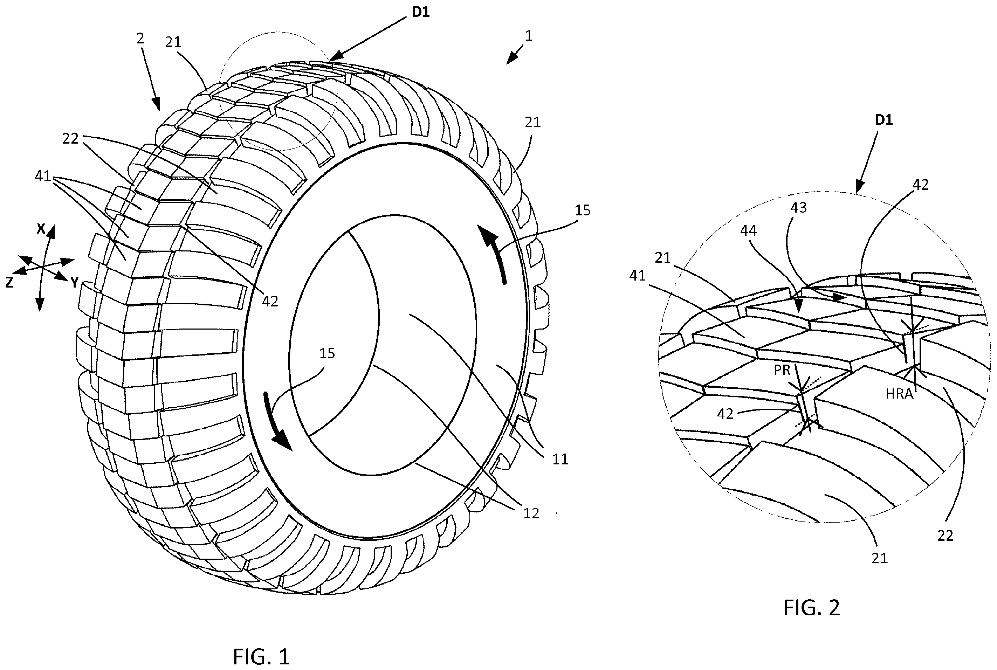

À la figure **1****,** on a représenté un pneu **1** comprenant une bande de roulement **2** selon l'invention. Ce pneu est destiné à équiper un essieu moteur d'un engin agricole. Ce pneu comprend en outre des flancs **11** et des bourrelets **12** de manière connu en soi. Le sens de roulement préférentiel du pneu est indiqué par exemple par des flèches **15** moulées sur les flancs du pneu et/ou sur l'épaule de la bande de roulement. La sculpture de la bande de roulement comporte différentes éléments de sculptures comme des blocs ou des barrettes s'étendant radialement vers l'extérieur à partir d'une surface portante **22.** La bande de roulement **2** comprend en particulier dans sa partie centrale une série de blocs de sculpture **41** juxtaposés les uns aux autres dans la direction longitudinale **X.** Ces blocs de sculpture sont séparés les uns des autres par des découpures transversales de préférence sous la forme d'incisions transversales **42** que l'on voit mieux sur la vue de détail de la figure **2****.** La bande de roulement représentée ici à une largeur d'environ 600 mm et la série de blocs de la partie centrale a une largeur de 240 mm, c'est à dire représentant 40% de la largeur de la bande de roulement.

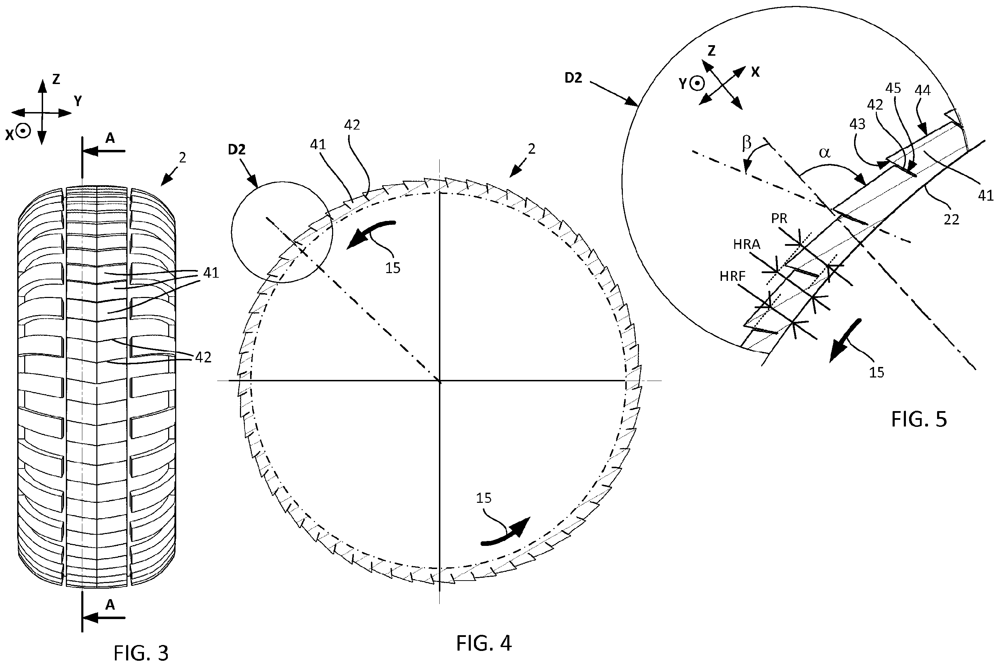

Le détail **D2** de la figure **5** montrent la série des blocs **41** en coupe selon un plan parallèle aux directions **X** et **Z,** c'est à dire perpendiculaire à la direction axiale **Y** (voir **A-A** sur la figure **3**). On voit bien sur cette figure que chacun desdits blocs **41** de la série comporte selon le sens de roulement **15** une face d'attaque **43,** une face de contact **44** et une face de fuite **45.** La face de contact est la face au sommet du bloc qui est destinée à rouler et porter la charge sur un sol rigide. Dans le sens de roulement préférentiel du pneu, la face d'attaque **43** est alors celle qui entre la première dans l'aire de contact alors que la face de fuite est celle qui sort la dernière de l'aire de contact. Sur un sol meuble, les blocs peuvent s'enfoncer dans le sol. Selon l'invention, la face d'attaque a, à partir de la surface portante **22,** une hauteur radiale **HRA** supérieure à la hauteur radiale de la face de fuite **HRF.** Comme détaillé sur la figure **5****,** la face de contact **44** est ainsi orientée selon un angle **α** par rapport à la direction radiale **Z, α** étant selon l'invention compris entre 93 et 105 degrés. Sur cet exemple l'angle **α** vaut 97 degrés. L'incision **42** est dans le prolongement de la face d'attaque et forme un angle **β** avec la direction radiale **Z.** Sur cet exemple, l'angle **β** vaut 25 degrés. La profondeur radiale **PR** des incisions est au moins égal à 50% de la hauteur radiale **HRA** des faces d'attaque, sur cet exemple, **PR** vaut environ 70% de **HRA.** Le fond des incisions **42** peut en outre comporter une forme localement élargie de manière connue en soi.

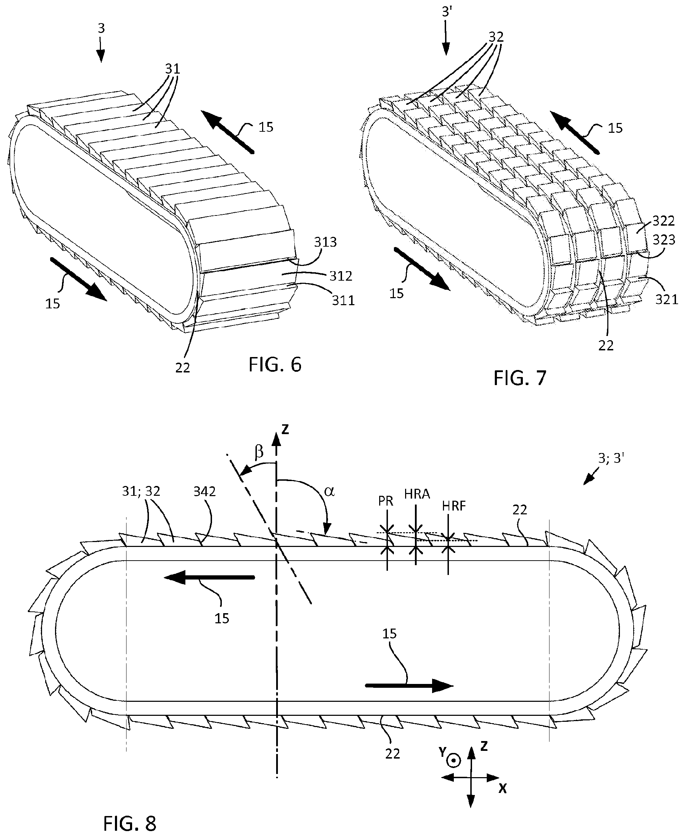

Les figures **6** à **8** représentent des modes de réalisation de l'invention appliquée à des chenilles.

À la figure **6****,** la chenille **3** comporte des barrettes transversales **31** juxtaposés longitudinalement et séparées par des incisions transversales **342.** En référence au sens de roulement préférentiel (flèches **15**), chaque barrette comporte une face d'attaque **311,** une face de contact **312** et une face de fuite **313.**

À la figure **7****,** la chenille **3'** comporte des blocs **32** juxtaposés à la fois longitudinalement et transversalement. En référence au sens de roulement préférentiel (flèches **15**), chaque bloc comporte une face d'attaque **321,** une face de contact **322** et une face de fuite **323.**

Sur ces deux exemples, la largeur des barrettes ou des rangées de blocs représente 100% de la largeur de la bande de roulement.

La vue de côté de la figure **8** peut représenter chacun de ces deux modes de réalisation et permet de mieux appréhender les angles et dimensions déjà décrits plus haut en référence à la figure **5****.** Les faces d'attaque ont une hauteur **HRA** supérieure à la hauteur HRF des faces de fuite de sorte que les faces d'appui forment un angle **α** avec la direction radiale **Z.** Sur cet exemple, l'angle **α** vaut 100 degrés. Les incisions **342** sont dans le prolongement des faces d'attaque et forment un angle **β** avec la direction radiale **Z.** Sur cet exemple, l'angle **β** vaut 30 degrés. La profondeur radiale **PR** des incisions est sur cet exemple égal à 100% de la hauteur des faces d'attaque **HRA.**

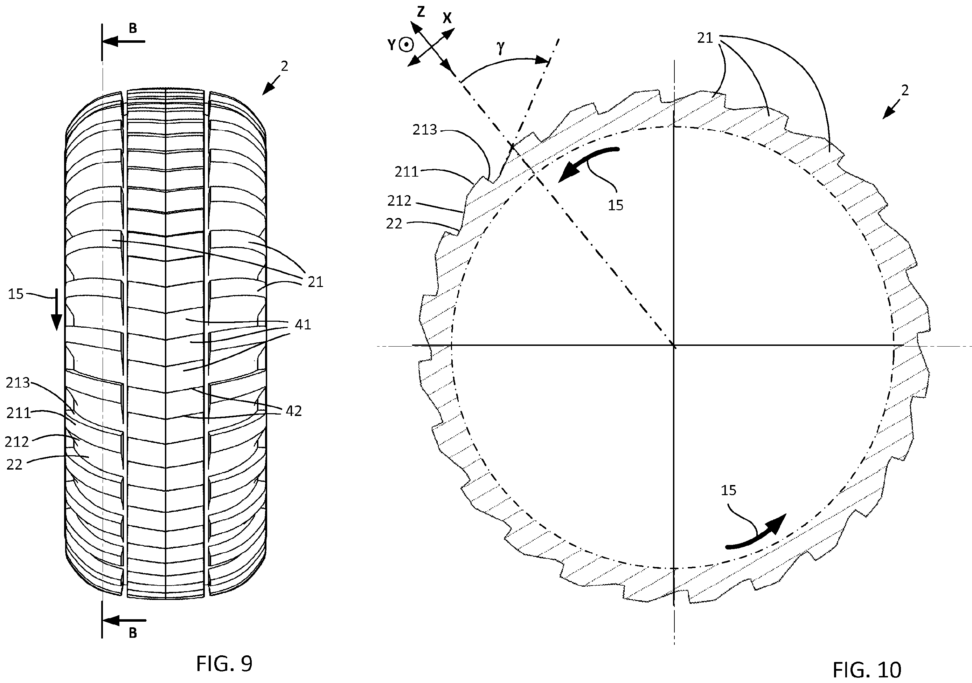

Les figures **9** à **11** illustrent des modes de réalisation de l'invention dans lesquels la bande de roulement comporte en dehors de sa partie centrale des éléments de sculpture latéraux sous forme de blocs ou portions de barrettes **21.**

Chaque bloc latéral **21** comporte en particulier une face de contact **211,** une face d'attaque **212** et une face de fuite **213.** La face de contact est la face au sommet du bloc qui est destinée à rouler et porter la charge sur un sol rigide. Sur un sol meuble, les blocs peuvent s'enfoncer dans le sol. Dans le sens de roulement préférentiel du pneu, la face d'attaque **212** est alors celle qui entre la première dans l'aire de contact et peut transmettre un effort moteur alors que la face de fuite est celle qui sort la dernière de l'aire de contact. La face de fuite **213** ne peut transmettre d'effort au sol que lors d'une phase de freinage ou de marche arrière.

La figure **10** est une représentation de la section **B-B** issue de la vue de face du pneu représenté à la figure **9****.** Cette section permet de clairement visualiser l'orientation des faces d'attaque des blocs ou portions de barrettes **21.** Les faces d'attaque sont inclinées vers l'arrière par rapport à la direction radiale selon le sens de roulement préférentiel indiqué par les flèches **15** et forment un angle **γ** avec cette direction radiale **Z.** L'angle **γ** est compris entre 50° et 75°. Sur cet exemple, l'angle **γ** est de 60°.

La bande de roulement selon ce mode de réalisation est parfaitement symétrique par rapport au plan équatorial médian du pneu. Dans une variante non représentée, les motifs latéraux des deux moitiés de la bande de roulement situées de part et d'autre du plan équatorial médian peuvent au contraire être décalés les uns par rapport aux autres selon la direction circonférentielle comme c'est souvent le cas pour les sculptures à barrettes des pneus agricoles de l'état de la technique.

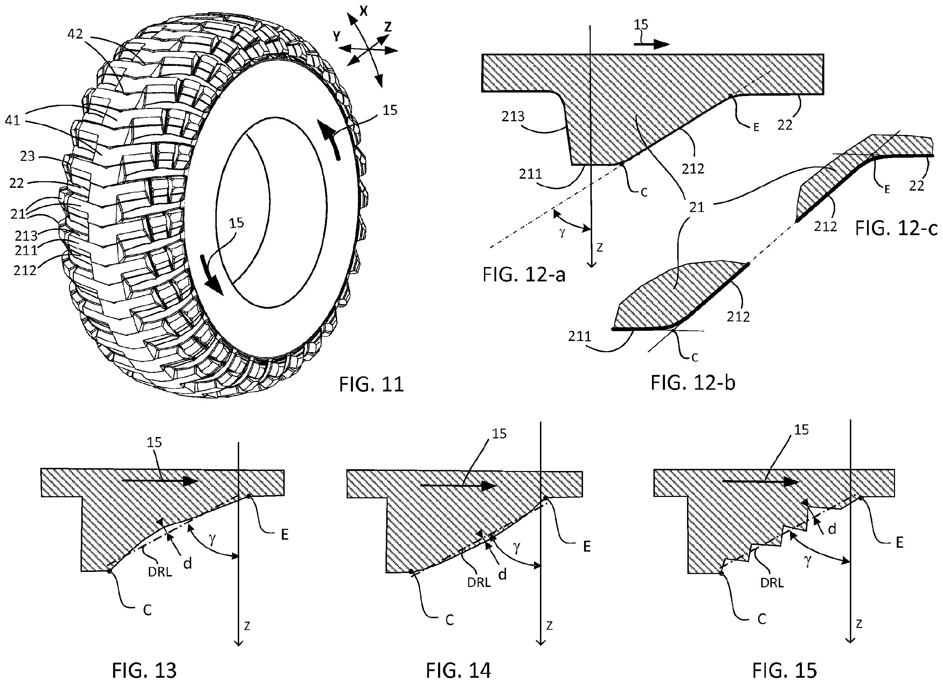

La figure **11** illustre un pneu selon autre mode de réalisation de l'invention dans lequel les éléments de sculpture latéraux sont des blocs de sculpture ayant sensiblement comme base un quadrilatère. Au sein de chaque rangée, les blocs sont disposés de sorte que leurs faces d'attaque sont alignées entre elles, c'est à dire qu'elles forment ensemble une quasi-continuité seulement interrompue par des découpures longitudinales **23.** En outre, les blocs latéraux jouxtant la partie centrale de la bande de roulement sont solidaires des blocs adjacents de la partie centrale. Cette liaison est alternée entre la série des blocs latéraux d'une côté de la bande de roulement et celle des blocs latéraux de l'autre côté de la bande de roulement. Des incisions transversales dans les faces d'attaques des blocs latéraux sont alignées avec les incisions transversales **42** qui séparent entre eux les blocs de la partie centrale. La bande de roulement représentée ici a une largeur d'environ 600 mm et la série de blocs de la partie centrale a une largeur d'environ 140 mm, c'est à dire représentant 23% de la largeur de la bande de roulement.

Les figures **12-a** à **12-c** montrent à plus grande échelle un exemple de profil de blocs latéraux dont la face d'attaque **212** est reliée à la face de contact **211** et à la surface portante **SP** par des congés de raccordement. Un point **C** est défini à l'intersection des prolongements de la face d'attaque et de la face de contact et un point **E** est défini à l'intersection des prolongements de la face d'attaque **212** et de la surface portante **22.** L'angle d'inclinaison **γ** de la face d'attaque est alors l'angle que fait avec la direction radiale **Z** la droite passant par **C** et **E.**

Les figures **13, 14** et **15** montrent des exemples de cas où la face d'attaque **212** n'est pas plane. Dans ce cas on considèrera l'angle d'inclinaison **γ** de la droite de régression linéaire **DRL** du profil de la face d'attaque entre les points **C** et **E** où la face d'attaque rejoint respectivement la face de contact **211** et la surface portante **22.** De préférence, la distance **d** séparant le profil de sa droite de régression linéaire **DRL** reste inférieure à 15 mm.

Des tests comparatifs ont montré que les bandes de roulement des figures **1****,** **9** et **11** apportent par rapport à une bande de roulement conventionnelle une augmentation très sensible de la performance de traction sur sol meuble. On a pu mesurer des gains entre 10% et 55% selon les conditions des tests et en particulier selon la typologie du sol et le taux de glissement considéré.

L'invention ne saurait être limitée à ces seuls exemples de réalisation décrits et diverses modifications peuvent y être apportées tout en restant dans le cadre tel que défini par les revendications.

## Revendications

1. - Bande de roulement (**2**) pour l'essieu moteur d'un engin agricole, ladite bande de roulement comprenant des éléments de sculpture (**21, 41**) s'étendant radialement vers l'extérieur à partir d'une surface portante (**22**), lesdits éléments de sculpture comprenant dans la partie centrale de la bande de roulement une série de blocs (**41**) juxtaposés les uns aux autres dans la direction longitudinale, lesdits blocs de sculpture étant séparés les uns des autres par des découpures transversales (**42**), lesdits blocs comportant selon le sens de roulement (**15**) une face d'attaque, une face de contact et une face de fuite, **caractérisée en ce que** ladite face d'attaque a, à partir de la surface portante (22), une hauteur radiale **HRA** supérieure à la hauteur radiale **HRF** de la face de fuite, **en ce que** la face de contact est orientée selon un angle α par rapport à la direction radiale **Z, α** étant compris entre 93 et 105 degrés, **en ce que** la profondeur radiale **PR** des découpures transversales (**42**) est au moins égale à 50% de la hauteur radiale **HRA** de la face d'attaque, **en ce que** la largeur desdits blocs représente au moins 15% de la largeur de la bande de roulement, **en ce que** les découpures transversales sont des incisions transversales (**42**), **en ce que** les incisions transversales (**42**) sont inclinées vers l'avant selon le sens de roulement (**15**) de la bande de roulement, les incisions transversales étant orientées selon un angle **β** par rapport à la direction radiale Z, **β** étant compris entre 5 et 35 degrés, **en ce que β** est au moins égal à 20 degrés **et en ce que** la bande de roulement (**2**) comprend en outre des éléments de sculpture latéraux (**21**), lesdits éléments de sculpture latéraux comprenant une face de contact (**211**), une face d'attaque (**212**) et une face de fuite (**213**), ladite face d'attaque étant inclinée d'un angle **γ** vers l'arrière par rapport à la direction radiale **Z** selon le sens de roulement (**15**) de la bande de roulement, l'angle **γ** étant compris entre 50 degrés et 75 degrés.

2. **-** Bande de roulement (**2**) selon la revendication 1 dans laquelle l'angle **α** est compris entre 97 et 100 degrés.

3. **-** Bande de roulement (**2**) selon l'une des revendications **1** ou **2** dans laquelle la profondeur radiale **PR** des incisions transversales est au moins égale à 70% de la hauteur radiale de la face d'attaque **HRA.**

4. **-** Bande de roulement selon l'une quelconque des revendications 1 à 3 dans laquelle l'angle **γ** est compris entre 60 degrés et 70 degrés.

5. **-** Bande de roulement selon l'une quelconque des revendications 1 à 4 dans laquelle les éléments de sculpture latéraux sont des blocs ayant une base de quadrilatère et formant entre eux des rangées selon une direction sensiblement transversale.

6. **-** Bande de roulement selon la revendication **5** dans laquelle les blocs de sculpture au sein de chaque rangée sont disposés de façon à ce que leurs faces d'attaque (**212**) soient alignées entre elles.

7. - Pneumatique (**1**) comprenant une bande de roulement selon l'une quelconque des revendications 1 à 6.

8. - Chenille (**3**) comprenant une bande de roulement selon l'une quelconque des revendications 1 à 6.

9. **-** Roue non pneumatique comprenant une bande de roulement selon l'une quelconque des revendications 1 à 6.

## Patentansprüche

1. Laufstreifen (2) für die Antriebsachse einer landwirtschaftlichen Maschine, wobei der Laufstreifen Profilelemente (21, 41) umfasst, die sich radial nach außen von einer Trägerfläche (22) aus erstrecken, wobei die Profilelemente in dem zentralen Teil des Laufstreifens eine Reihe von in der Längsrichtung nebeneinander liegenden Blöcken (41) umfasst, wobei die Profilblöcke voneinander durch quer verlaufende Ausschnitte (42) getrennt sind, wobei die Blöcke entlang der Rollrichtung (15) eine Vorderseite, eine Kontaktseite und eine Rückseite beinhalten, **dadurch gekennzeichnet, dass** die Vorderseite, ausgehend von ihrer Trägerfläche (22), eine radiale Höhe HRA hat, die größer als die radiale Höhe HRF der Rückseite ist, dass die Kontaktseite gemäß einem Winkel α in Bezug auf die radiale Richtung Z ausgerichtet ist, wobei α zwischen 93 und 105 Grad beträgt, dass die radiale Tiefe PR der quer verlaufenden Ausschnitte (42) mindestens 50 % der radialen Höhe HRA der Vorderseite beträgt, dass die Breite der Blöcke mindestens 15 % der Breite des Laufstreifens ausmacht, dass die quer verlaufenden Ausschnitte quer verlaufende Einschnitte (42) sind, dass die quer verlaufenden Einschnitte (42) nach vorne hin gemäß der Rollrichtung (15) des Laufstreifens geneigt sind, wobei die quer verlaufenden Einschnitte gemäß einem Winkel β in Bezug auf die radiale Richtung Z geneigt sind, wobei β zwischen 5 und 35 Grad beträgt, dass β mindestens 20 Grad beträgt und dass der Laufstreifen (2) ferner seitliche Profilelemente (21) umfasst, wobei die seitlichen Profilelemente eine Kontaktseite (211), eine Vorderseite (212) und eine Rückseite (213) umfassen, wobei die Vorderseite um einen Winkel γ nach hinten hin in Bezug auf die radiale Richtung Z gemäß der Rollrichtung (15) des Laufstreifens geneigt ist, wobei der Winkel γ zwischen 50 Grad und 75 Grad beträgt.

2. Laufstreifen (2) nach Anspruch 1, wobei der Winkel α zwischen 97 und 100 Grad beträgt.

3. Laufstreifen (2) nach einem der Ansprüche 1 oder 2, wobei die radiale Tiefe PR der quer verlaufenden Einschnitte mindestens 70 % der radialen Höhe der Vorderseite HRA beträgt.

4. Laufstreifen nach einem der Ansprüche 1 bis 3, wobei der Winkel γ zwischen 60 Grad und 70 Grad beträgt.

5. Laufstreifen nach einem der Ansprüche 1 bis 4, wobei die seitlichen Profilelemente Blöcke sind, die eine viereckige Basis haben und untereinander Reihen entlang einer im Wesentlichen quer verlaufenden Richtung bilden.

6. Laufstreifen nach Anspruch 5, wobei die Profilblöcke innerhalb jeder Reihe so angeordnet sind, dass ihre Vorderseiten (212) untereinander fluchten.

7. Reifen (1) mit einem Laufstreifen nach einem der Ansprüche 1 bis 6.

8. Raupe (3) mit einem Laufstreifen nach einem der Ansprüche 1 bis 6.

9. Luftloses Rad mit einem Laufstreifen nach einem der Ansprüche 1 bis 6.

## Claims

1. - Tread (**2**) for the driven axle of an agricultural vehicle, said tread comprising tread pattern elements (**21, 41**) extending radially towards the outside from a bearing surface (**22**), said tread pattern elements comprising, in the central part of the tread, a series of blocks (**41**) that are juxtaposed with one another in the longitudinal direction, said tread pattern blocks being separated from one another by transverse cuts (**42**), said blocks having, in the rolling direction (**15**), a leading face, a contact face and a trailing face, **characterized in that** said leading face has, from the bearing surface (**22**), a radial height **HRA** greater than the radial height **HRF** of the trailing face, **in that** the contact face is oriented at an angle α with respect to the radial direction **Z, α** being between 93 and 105 degrees, **in that** the radial depth **PR** of the transverse cuts (**42**) is at least equal to 50% of the radial height **HRA** of the leading face, **in that** the width of said blocks represents at least 15% of the width of the tread, **in that** the transverse cuts are transverse sipes (**42), in that** the transverse sipes (**42**) are inclined towards the front in the rolling direction (**15**) of the tread, the transverse sipes being oriented at an angle **β** with respect to the radial direction Z, **β** being between 5 and 35 degrees, **in that β** is at least equal to 20 degrees **and in that** the tread also comprises lateral tread pattern elements (**21**), said lateral tread pattern elements comprising a contact face (**211**), a leading face (**212**) and a trailing face (**213**), said leading face being inclined at an angle γ towards the rear with respect to the radial direction **Z** in the rolling direction (**15**) of the tread, the angle γ being between 50 degrees and 75 degrees.

2. - Tread (**2**) according to Claim **1,** wherein the angle **α** is between 97 and 100 degrees.

3. - Tread (**2**) according to either of Claims **1** or **2,** wherein the radial depth **PR** of the transverse sipes is at least equal to 70% of the radial height of the leading face **HRA.**

4. - Tread according one of Claims 1 to 3, wherein the angle **γ** is between 60 degrees and 70 degrees.

5. - Tread according to one of Claims 1 to 4, wherein the lateral tread pattern elements are blocks that have a quadrilateral base and form rows in a substantially transverse direction between one another.

6. - Tread according to Claim **5,** wherein the tread pattern blocks within each row are disposed such that their leading faces (**212**) are aligned with one another.

7. **-** Tyre (**1**) comprising a tread according to one of Claims 1 to 6.

8. - Caterpillar track (**3**) comprising a tread according to one of Claims 1 to 6.

9. - Non-pneumatic wheel comprising a tread according to one of Claims 1 to 6.
